# EUROPÄISCHE PATENTANMELDUNG

(11) **EP 0 703 416 A1**
(43) Veröffentlichungstag der Anmeldung: **27.03.1996**
(21) Anmeldenummer: 95113144.0
(22) Anmeldetag: 22.08.1995
(51) Int. Cl.: F24D 19/10

(54) **Zentralheizungsanlage**

(30) Priorität: 17.09.1994 DE 9415089 U
(71) Anmelder: ROBERT BOSCH GMBH, D-70442 Stuttgart (DE)
(72) Erfinder: Boettigheimer, Andreas, Ing., D-72639 Neuffen (DE)

(57) **Zusammenfassung**

Es wird eine Zentralheizungsanlage (10) vorgeschlagen, die einen Heizkreis (10) sowie eine Umwälzpumpe (12) enthält. Eine signalverarbeitende Anordnung (21) beeinflußt die Förderleistung (F) der Umwälzpumpe (12) in Abhängigkeit von der Differenz zwischen der Vorlauftemperatur (T_{V}) und der Rücklauftemperatur (T_{R}). Bei einer Änderung (dF) der Förderleistung (F) der Umwälzpumpe (12) ist die Ermittlung einer Druckänderung (dp) vorgesehen, die ein ordnungsgemäßen Arbeiten der Umwälzpumpe (12) anzeigt.

## Beschreibung

### Stand der Technik

Die Erfindung geht aus von einer Zentralheizungsanlage und Verfahren zum Betreiben der Zentralheizungsanlage nach der Gattung der unabhängigen Ansprüche. Aus der Fachzeitschrift "Elektronik", Vol. 22, 5.11.1982, S. 115 - 118 ist ein Regelsystem für eine Zentralheizungsanlage bekannt, das die Temperatur eines Heizkessels sowie eine Vorlauftemperatur eines Heizkreises regelt in Abhängigkeit von der Differenz zwischen der vorzugebenden Vorlauftemperatur und einer Rücklauftemperatur des Heizkreises. Vorausgesetzt für das ordnungsgemäße Arbeiten der Regelung wird ein konstanter Massenfluß im Wasserkreislauf des Heizkreises. Unter dieser Voraussetzung spiegelt die Differenz zwischen der Vorlaufund der Rücklauftemperatur den ohne weitere Maßnahmen Wärmebedarf eines zu beheizenden Gebäudes wieder. Eine im Heizungskreis angeordnete Umwälzpumpe muß daher eine bestimmte Pumpenleistung aufweisen, um zu gewährleisten, daß jederzeit eine konstante Umlaufgeschwindigkeit erreicht wird. Eine Beeinflussung der Pumpenleistung ist nicht vorgesehen. Das vorbekannte Regelsystem läßt die Frage offen, welchen Einfluß Heizkörperthermostatventile auf die Umlaufgeschwindigkeit im Heizkreis haben, die in Abhängigkeit von der Differenz zwischen vorgegebener Raumsolltemperatur und der gemessenen Raumisttemperatur den Wasserdurchfluß im Heizkörper vollständig freigeben oder auf niedrigere Werte drosseln.

Der Erfindung liegt die Aufgabe zugrunde, eine Zentralheizungsanlage anzugeben, die ein ökonomisches Betreiben einer in einem Heizkreis angeordneten Umwälzpumpe ermöglicht.

Die Aufgabe wird durch die im unabhängigen Anspruch enthaltenen Merkmale gelöst.

### Vorteile der Erfindung

Die erfindungsgemäße Zentralheizungsanlage weist den Vorteil auf, daß die Leistung der Umwälzpumpe dem tatsächlichen Wärmebedarf des Gebäudes angepaßt ist. Einsparungen ergeben sich durch den geringeren elektrischen Energiebedarf der Umwälzpumpe. Weiterhin positiv bemerkbar macht sich der geringere Verschleiß der Umwälzpumpe. Ein anderer mittelbarer Vorteil ergibt sich dadurch, daß eine Geräuschbelästigung, die von weitgehend geschlossenen Thermostatventilen bei unverändert hohem Pumpendruck verursacht sein können, vermieden werden. Erfindungsgemäß ist vorgesehen, daß die Förderleistung der Umwälzpumpe in Abhängigkeit von der Differenz zwischen der Vorlauftemperatur und der Rücklauftemperatur beeinflußt ist.

Vorteilhafte Weiterbildungen und Ausgestaltungen der erfindungsgemäßen Zentralheizungsanlage ergeben sich aus abhängigen Ansprüchen.

Eine besonders einfache Beeinflussung der Förderleistung der Umwälzpumpe ergibt sich durch eine Steuerung oder eine Regelung der elektrischen Antriebsleistung der Umwalzpumpe.

Ein in der Zentralheizungsanlage enthaltener Drucksensor ermöglicht eine Funktionsüberwachung der Umwälzpumpe. Eine vorteilhafte Ausgestaltung sieht vor, daß der Drucksensor in einer mikromechanischen Sensorbaugruppe enthalten ist, die gleichzeitig einen Temperatursensor enthält, der entweder die Vorlauf- oder vorzugsweise die Rücklauftemperatur erfaßt.

Eine vorteilhafte Ausgestaltung sieht vor, daß die Förderleistung der Umwälzpumpe auf einen konstanten Differenztemperaturwert zwischen Vorlauf- und Rücklauftemperatur gesteuert oder geregelt ist. Eine vorteilhafte Weiterbildung dieser Ausgestaltung sieht vor, daß die vorgegebene Differenz in Abhängigkeit von der Vorlauftemperatur festgelegt wird.

Eine Weiterbildung sieht vor, daß nach jeder Änderung der Förderungsleistung der Umwälzpumpe eine Druckänderung im Heizkreis erfaßt und ausgewertet wird. Mit dieser Maßnahme ist es möglich, das ordnungsgemäße Arbeiten der Umwälzpumpe feststellen zu können.

Weitere vorteilhafte Weiterbildungen der erfindungsgemäßen Vorrichtung ergeben sich aus weiteren abhängigen Ansprüchen und aus der folgenden Beschreibung.

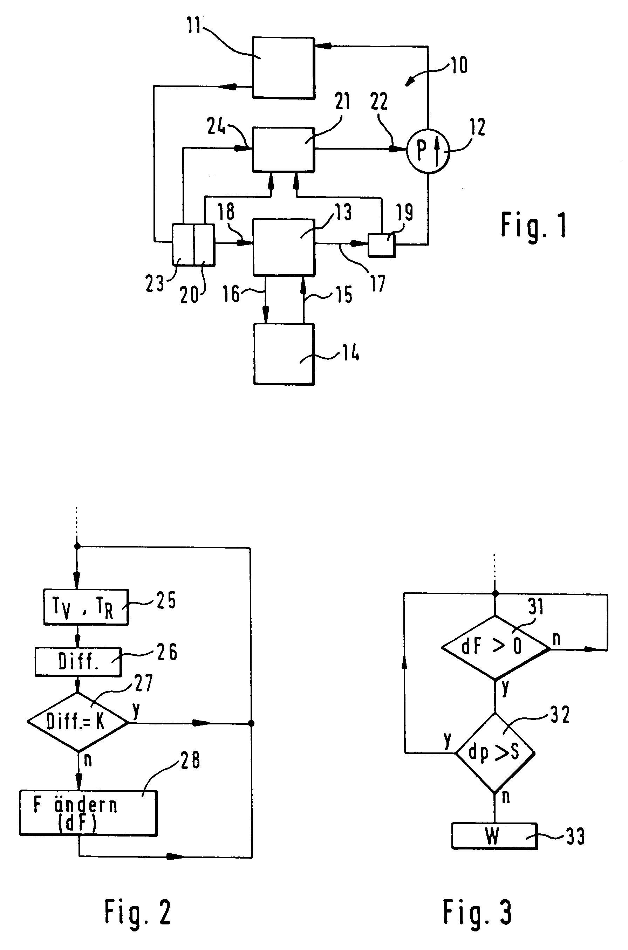

Figur 1 zeigt ein Blockschaltbild einer erfindungsgemäßen Zentralheizungsanlage und Figuren 2 und 3 zeigen Flußdiagramme.

Figur 1 zeigt einen Heizkreis 10 einer Zentralheizungsanlage, der wenigstens einen Heizkörper 11, wenigstens eine Umwälzpumpe 12 sowie einen Mischer 13 enthält. Der Heizkreis 10 verteilt die in einem Wärmeerzeuger 14 bereitgestellte thermische Energie auf die einzelnen, in nicht näher gezeigten Räumen angeordneten Heizkörper 11. Der Wärmeerzeuger 14 steht mit dem Mischer 13 über einen Wärmeerzeugervorlauf 15 und einen Wärmeerzeugerrücklauf 16 in Verbindung. Die Umwälzpumpe 12 bewirkt einen vom Mischer 13 ausgehenden Vorlauf 17 sowie einen zum Mischer 13 zurückfließenden Rücklauf 18. Die Temperatur des Vorlaufs 17 erfaßt ein Vorlauftemperatursensor 19 und die des Rücklaufs 18 ein Rücklauftemperatursensor 20. Die erfaßten Temperaturen werden in einer signalverarbeitenden Anordnung 21 verarbeitet, die eine Stellgröße 22 für die Förderleistung der Umwälzpumpe 12 an die Umwälzpumpe 12 abgibt. Die signalverarbeitende Anordnung 21 erhält weiterhin ein von einem Drucksensor 23 ermitteltes Drucksignal 24 zugeleitet. Der Drucksensor 23 erfaßt einen Druck des im Heizkreislauf 10 fließenden Wärmeträgermediums.

Die Arbeitsweise der in Figur 1 gezeigten Zentralheizungsanlage wird anhand der in den Figuren 2 und 3 gezeigten Flußdiagramme näher erläutert:

Figur 2 zeigt die Festlegung der Förderleistung F der Umwälzpumpe 12 in Abhängigkeit von der Differenz zwischen der Vorlauftemperatur und der Rücklauftemperatur. In einem ersten Schritt 25 werden die Vorlauftemperatur T_{V} sowie die Rücklauftemperatur T_{R} ermittelt. In einem zweiten Schritt 26 ermittelt die signalverarbeitende Anordnung 21 die Differenz zwischen der Vorlauftemperatur T_{V} und der Rücklauftemperatur T_{R}. In einer ersten Abfrage 27 wird festgestellt, ob die Differenz gleich einer vorgegebenen Konstanten K ist. Falls dies zutrifft, sind keine weiteren Maßnahmen erforderlich. Falls dies nicht zutrifft, ist die Förderleistung F in einer Zuweisung 28 zu ändern. Ob die Förderleistung F zu erhöhen oder abzusenken ist, hängt von der installierten Heizungsanlage, insbesondere von den Kennlinien der gegebenenfalls vorhandenen Thermostatventilen ab. Bei vorhandenen Heizungsanlagen, die nachzurüsten sind, kann experimentell festgestellt werden, ob eine Absenkung oder Erhöhung der Förderleistung F bei einer festgestellten Temperaturänderung zwischen Vorlauf- und Rücklauftemperatur vorzunehmen ist. Bei neu installierten Anlagen, deren Komponenten bekannt sind, kann das Verhalten vorab zumindest abgeschätzt werden.

Eine vorteilhafte Weiterbildung sieht vor, daß die Konstante K von der Vorlauftemperatur T_{V} abhängt. Mit dieser Maßnahme ist es möglich, die Förderleistung F der Umwälzpumpe 12 noch genauer an den Wärmebedarf anzupassen. Bei einem geringeren Wärmebedarf wird eine kleinere Differenz zugelassen als bei einem größeren Wärmebedarf.

Die Vorlauftemperatur T_{V} erhält die signalverarbeitende Anordnung vom Vorlauftemperatursensor 19. In einer anderen Ausgestaltung der erfindungsgemäßen Zentralheizungsanlage kann anstelle des Vorlauftemperatursensors 19 ein Signal treten, daß wenigstens näherungsweise ein Maß für die Vorlauftemperatur T_{V} ist. Ein solches Signal ist beispielsweise ein von einem Außentemperaturfühler abgegebenes Signal, das gegebenenfalls neben der vom Wärmeerzeuger 14 bereitgestellten Energie gleichzeitig die Vorlauftemperatur T_{V} beeinflußt.

Figur 3 zeigt die Auswertung des vom Drucksensor 23 abgegebenen Drucksignals 24, um ein Signal zu erhalten, das ein ordnungsgemäßes Arbeiten der Umwälzpumpe 12 signalisiert. Die Auswertung beruht darauf, daß bei jeder Änderung (dF) der Förderleistung F der Umwälzpumpe 12 eine Druckänderung auftritt, die der Drucksensor 23 erfaßt. Entsprechend ist als erster Schritt 31 eine Abfrage 31 vorgesehen, in welcher festgestellt wird, ob eine Änderung der Förderungsleistung dF der Umwälzpumpe 12 aufgetreten ist. Falls dies zutrifft, muß anschließend in einer zweiten Abfrage 32 eine Druckänderung dp aufgetreten sein. Falls dies nicht der Fall ist, wird in einer Anweisung 33 eine Warnmeldung W ausgegeben.

Die von der signalverarbeitenden Anordnung 21 ausgegebene Stellgröße 22 kann beispielsweise eine mechanische Einrichtung verstellen, welche die Förderleistung F der Umwälzpumpe 12 festlegt. Vorzugsweise ist die Stellgroße 22 ein elektrisches Signal, das die elektrische Antriebsleistung der Umwälzpumpe 12 entweder steuert oder auf einen vorgegebenen Wert regelt.

Der für die Erfassung der Rücktemperatur T_{R} erforderliche Rücklauftemperatursensor 20 sowie der im Heizkreis 10 angeordnete Drucksensor 23 werden vorzugsweise als eine gemeinsame Sensorbaugruppe in Mikromechanik realisiert. Sowohl der Rücklauftemperatursensor 20 als auch der Drucksensor 23 sind aus einem gemeinsamen Siliziumsubstrat hergestellt, aus dem die beiden Sensoren 20, 23 herausgearbeitet sind. Mit dieser Maßnahme ist eine kostengünstige Realisierung der beiden Sensoren möglich. Weiterhin ergibt sich der besondere Vorteil, daß ein gegebenenfals vorhandener Temperaturgang des Drucksensors 23 mittels des vom Rücklauftemperatursensor 20 bereitgestellten Signals korrigierbar ist.

## Patentansprüche

1. Zentralheizungsanlage mit wenigstens einem Heizkreis, der wenigstens einen Heizkörper und eine Umwälzpumpe enthält, sowie mit Mitteln zum wenigstens näherungsweisen Erfassen einer Vorlauftemperatur, dadurch gekennzeichnet, daß Mittel (20) zum Erfassen einer Rücklauftemperatur (T_{R}) und eine signalverarbeitende Anordnung (21) vorgesehen sind und daß die signalverarbeitende Anordnung (21) die Förderleistung (F) der Umwälzpume (12) in Abhängigkeit von der Differenz zwischen Vorlauftemperatur (T_{V}) und Rücklauftemperatur (T_{R}) beeinflußt.

2. Zentralheizungsanlage nach Anspruch 1, dadurch gekennzeichnet, daß die signalverarbeitende Anordnung (21) eine Stellgröße (22) bereitstellt zum Steuern oder Regeln einer elektrischen Antriebsleistung der Umwälzpumpe (12).

3. Zentralheizungsanlage nach Anspruch 1, dadurch gekennzeichnet, daß im Heizkreis (10) ein Drucksensor (23) vorhanden ist.

4. Zentralheizungsanlage nach Anspruch 1 und 3, dadurch gekennzeichnet, daß ein Rücklauftemperatursensor (20) vorgesehen ist, der zusammen mit dem Drucksensor (23) eine Sensoranordnung bildet, die beide Sensoren (20, 23) in einer Baugruppe vereinigt.

5. Zentralheizungsanlage nach Anspruch 4, dadurch gekennzeichnet, daß der Rücklauftemperatursensor (20) und der Drucksensor (23) in einer mikromechanischen Struktur aus einem gemeinsamen Substrat herausgearbeitet sind.

6. Zentralheizungsanlage nach Anspruch 1, dadurch gekennzeichnet, daß die signalverarbeitende Anordnung (21) die Förderleistung (F) der Umwälzpumpe (12) auf eine konstante Differenz zwischen der Vorlauftemperatur (T_{V}) und der Rücklauftemperatur (T_{R}) steuert oder regelt.

7. Zentralheizungsanlage nach Anspruch 6, dadurch gekennzeichnet, daß die vorgegebene Differenz von der Vorlauftemperatur (T_{V}) abhängt.

8. Zentralheizungsanlage nach Anspruch 1 und 3, dadurch gekennzeichnet, daß bei einer Änderung (dF) der Förderleistung (F) der Umwälzpumpe (12) die Ermittlung einer Druckänderung (dp) vorgesehen ist, und daß bei einer Unterschreitung einer vorgegebenen Schwelle der Druckänderung (dp) eine Warnmeldung (W, 33) erfolgt.
